(19) Europäisches Patentamt
European Patent Office
Office européen des brevets

(11) **EP 1 522 168 B1**

(12) **FASCICULE DE BREVET EUROPEEN**

(45) Date de publication et mention
de la délivrance du brevet:
**26.08.2009 Bulletin 2009/35**

(21) Numéro de dépôt: **03762734.6**

(22) Date de dépôt: **04.07.2003**

(51) Int Cl.:
***H04L 9/32*** *(2006.01)*

(86) Numéro de dépôt international:
**PCT/FR2003/002074**

(87) Numéro de publication internationale:
**WO 2004/006498 (15.01.2004 Gazette 2004/03)**

(54) **PROCEDE, SYSTEME ET SUPPORT INFORMATIQUE DE SECURISATION DE TRANSMISSION DE MESSAGES**

VERFAHREN, VORRICHTUNG UND DATENTRÄGER ZUR SICHERUNG EINER NACHRICHTENÜBERTRAGUNG

METHOD, SYSTEM AND COMPUTERIZED MEDIUM FOR MAKING SECURE MESSAGE TRANSMISSION

(84) Etats contractants désignés:
**AT BE BG CH CY CZ DE DK EE ES FI FR GB GR HU IE IT LI LU MC NL PT RO SE SI SK TR**

(30) Priorité: **04.07.2002 FR 0208418**

(43) Date de publication de la demande:
**13.04.2005 Bulletin 2005/15**

(73) Titulaire: **Algoril Holding SA**
**6300 Zoug (CH)**

(72) Inventeur: **Algoril Holding SA**
**6300 Zoug (CH)**

(74) Mandataire: **Schmit, Christian Norbert Marie et al**
**SCHMIT CHRETIEN**
**16, rue de la Paix**
**75002 Paris (FR)**

(56) Documents cités:
**WO-A-02/054667          US-A- 6 108 783**
**US-A- 6 163 842          US-A1- 2002 023 221**

• **DAVIES & W PRICE D: "SECURITY FOR COMPUTER NETWORKS" 1989 , SECURITY FOR COMPUTER NETWORKS. INTRODUCTION TO DATA SECURITY IN TELEPROCESSING AND ELECTRONIC FUNDS TRANSFER, CHICHESTER, WILEY & SONS, GB, PAGE(S) 252-281 XP002150682 page 261, dernier alinéa -page 262, alinéa 1**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**EP 1 522 168 B1**

**Description**

La présente invention concerne la sécurisation de la transmission de messages.

Il est déjà connu, d'après le document US-6 163 842, un procédé de sécurisation de la transmission d'un message entre un émetteur et un récepteur par intégration d'une signature au message constitué d'un bloc de données numériques, par exemple vidéo ou d'image, et par association au message signé d'informations de contrôle. De même, il est connu, d'après le document US-2002/023221, un procédé de type analogue destiné à la sécurisation de la transmission d'un message, essentiellement appliqué à Internent. Dans ces procédés, la loi utilisée pour l'obtention des informations de contrôle est explicite, si bien que le degré de sécurisation est limité.

Il est connu, dans la sécurisation de message, de déterminer une signature d'un message et de transmettre celle-ci accolée au message pour permettre à un dispositif récepteur, possédant une clé appairée à une clé ayant permis la génération de signature du message, soit de déchiffrer le message signé soit de calculer, à partir de la clé appairée, une autre signature et de la comparer à la signature reçue. Par clé appairée, il faut comprendre soit une clé publique associée à une clé privée d'un algorithme de chiffrement à clé publique, soit deux clés secrètes connues, l'une, d'une première entité, permettant le chiffrement d'un message envoyé, l'autre pour le déchiffrement d'un message reçu d'une autre entité disposant de l'autre clé permettant le déchiffrement des messages reçus de la première entité ou le chiffrement des messages émis vers la première entité.

Ces techniques de chiffrement des communications sous protocole sécurisé par cryptographie asymétrique (par exemple publique) ou symétrique présentent l'inconvénient que, à la fin d'un cycle de transport ou transfert, les contenus dématérialisés et signés ne sont pas toujours au rendez-vous et l'organisme récepteur n'est pas en mesure de certifier que le message reçu correspond parfaitement à celui émis et que, entre autres, l'autorité qui s'autocertifie ne peut pas valablement prouver l'intégrité des contenus lorsqu'ils ont fait l'objet d'altération accidentelle ou préméditée durant un cycle de leur transfert. En effet, il peut arriver que le message et la signature soient, fortuitement ou volontairement, tous deux altérés de façon coordonnée pour que l'altération ne puisse pas être détectée en fin de cycle d'auto-certification.

Les inventeurs ont en outre songé au fait que le problème de risque d'altération d'un message découle du fait que l'émetteur en perd le contrôle d'accès. Or, ce même problème se pose dans le cas du stockage de données dans un ordinateur personnel, à accès mal contrôlé, ou dans tout autre moyen de stockage local ou distant.

L'accès au moyen de stockage peut donc s'effectuer par une liaison interne de courte portée, vers un disque dur de l'ordinateur personnel, et alors la liaison se trouve protégée, lors du transfert, par le fait qu'elle est interne et que l'utilisateur est présent, mais il convient, après stockage, de protéger l'accès au disque dur, et donc en particulier cette liaison.

Lorsque le moyen de stockage est distant, l'émetteur y accède par une ligne dédiée ou, en général, par un réseau informatique local ou général, par exemple l'Internet. En pareil cas, le message peut être détourné ou modifié par un tiers lors de sa transmission.

L'invention vise donc à améliorer l'efficacité de la vérification d'intégrité d'un bloc de données dont le créateur a perdu le contrôle d'accès du fait d'une émission. Les données peuvent se présenter sous une forme quelconque, par exemple électronique, en mémoire optique, ou encore imprimées.

A cet effet, l'invention concerne tout d'abord un procédé de sécurisation de la transmission d'un message d'un émetteur à un récepteur selon la revendication 1.

Comme évoqué ci-dessus, le terme « message » doit être compris comme désignant tout ensemble de données transmis, cet ensemble de données n'étant pas nécessairement transmis sur une liaison d'un réseau informatique, et pouvant être de format quelconque et en particulier être exempt d'adresse d'émetteur et de récepteur.

Les informations de contrôle permettent ainsi de contrôler efficacement le contenu utile du message et au besoin aussi la signature. L'émetteur et le récepteur peuvent être des opérateurs humains ou des équipements de traitement de l'information. On notera que les informations de contrôle en émission peuvent être transmises de façon séparée du message.

Dans une forme de réalisation préférée, la dite loi met en oeuvre une fonction mathématique.

Le traitement peut ainsi s'effectuer par blocs de bits représentant par exemple un caractère du message. Un tel traitement des bits, parallèle et combiné, offre beaucoup plus de combinaisons qu'une fonction logique, à traitement série, comme par exemple une fonction OU exclusif. Le traitement par blocs est en outre plus rapidement exécuté dans une unité centrale classique, prévue pour uniquement des fonctions logiques et donc incapable de traiter indépendamment en parallèle plusieurs bits.

Selon l'invention, l'émetteur élabore et transmet en outre des informations d'identification de l'émetteur ayant servi à personnaliser ladite loi, et le récepteur personnalise de même la loi, d'après les informations d'identification de l'émetteur reçues, pour déterminer les informations de contrôle en réception.

L'état civil de l'émetteur représente ainsi une clé supplémentaire de contrôle.

Avantageusement, l'émetteur établit la dite loi pour que les informations de contrôle en émission soient représentatives d'au moins un type d'informations choisi parmi le groupe formé par des informations de consistance et des informations de signification du message.

Ainsi, la structure du message et/ou la signification des informations qu'il contient peut être vérifiée car elle est traduite dans les informations de contrôle.

Les informations de consistance du message peuvent par exemple être déterminées par un premier quotient provenant d'une division des informations d'identification de l'émetteur par un nombre de caractères contenus dans le message.

En pareil cas, un premier reste obtenu par la dite division peut être lui-même divisé par un nombre premier, pour obtenir un deuxième quotient et un deuxième reste, le deuxième reste étant ajouté à une constante pour obtenir un nombre de caractères prédéterminé, de consistance du message, après conversion dans une base choisie parmi une pluralité de bases de conversion.

Le reste du deuxième quotient peut en outre être divisé par un nombre premier pour obtenir un troisième quotient associé à un troisième reste dont la valeur est ajoutée à une valeur constante, pour obtenir les informations de consistance du message.

Le nombre premier est par exemple 46027 et la constante est par exemple 4623.

Les informations de consistance du message sont de préférence représentées par des caractères dont le nombre est inférieur à un seuil représentant un pourcentage déterminé par rapport à une taille des données transmises.

Les informations de signification du message sont par exemple déterminées par sommation d'un nombre déterminé de caractères alphanumériques du message, chaque caractère alphanumérique ayant pour valeur le double d'une valeur ASCII représentative du caractère considéré, diminuée d'une valeur ASCII représentative d'un caractère adjacent, la somme résultante servant de diviseur d'un dividende, constitué par les informations d'identification de l'émetteur, pour obtenir les informations de signification du message.

Les informations de signification du message sont de préférence représentées par des caractères dont le nombre est inférieur à un seuil représentant un pourcentage déterminé par rapport à une taille des données transmises.

Les informations d'identification de l'émetteur sont par exemple obtenue :

par une étape de transcodage de chaînes, de tailles déterminées, de caractères alphanumériques représentant des rubriques à protéger, fournissant un premier ensemble de résultats intermédiaires ayant chacun un nombre déterminé de chiffres, et

une étape de transformation du premier ensemble de résultats intermédiaires, par un algorithme de transformation choisi aléatoirement parmi une pluralité utilisant chacun une base de caractères alphanumériques particulière à l'algorithme considéré, pour obtenir un résultat final après conversion, par une matrice de conversion, des caractères de la base alphanumérique de l'algorithme choisi en des caractères à valeurs numériques d'une base prédéterminée.

Les informations d'identification de l'émetteur sont de préférence transmises sous forme cryptée, en transformant les informations d'identification de l'émetteur, en base déterminée, en un résultat crypté, à nombre déterminé de chiffres exprimés dans une base mathématique choisie aléatoirement parmi une pluralité de bases de conversion pour obtenir un identifiant crypté de l'émetteur dans lequel des informations, d'identification de la base mathématique choisie, sont insérées à un rang variable spécifié par un pointeur inséré à un rang pour lequel le récepteur dispose d'informations pour le déterminer.

En pareil cas, le rang des informations d'identification de la base mathématique choisie est par exemple défini par un quotient entier obtenu par division d'une valeur particulière, associée par une table au pointeur, par un nombre spécifiant la taille de la pluralité d'algorithmes.

Le rang du pointeur est par exemple inséré à un rang calculé en prenant la somme, modulo 9, de codes ASCII d'un dit résultat intermédiaire représentant des termes spécifiant une fonction mathématique déterminant les informations d'identification de l'émetteur.

Dans un mode de mise en oeuvre, le récepteur :

calcule la somme des codes ASCII d'au moins un bloc de données d'une dite rubrique alphanumérique, reçu dans les informations d'identification de l'émetteur,

- exprime la dite somme en modulo 9, pour déterminer le rang du pointeur,
- lit le dit pointeur reçu, et
- calcule le rang des informations d'identification de la base mathématique choisie, en divisant la valeur particulière, associée au pointeur, par la valeur représentant la taille de la pluralité d'algorithmes, exprimées en base prédéterminée, et
- exploite les informations cryptées reçues après en avoir éliminé les informations d'identification de la base mathématique choisie et le pointeur.

Les données représentant le message peuvent être transmises au récepteur à travers un système de stockage de données.

En pareil cas, le récepteur peut être aussi l'émetteur, c'est-à-dire que le créateur des données utiles peut les relire ultérieurement, après stockage local ou distant, et en vérifier l'intégrité.

L'invention concerne aussi un système de sécurisation pour la mise en oeuvre du procédé de l'invention, comprenant un émetteur associé à un récepteur, l'émetteur étant agencé pour élaborer et intégrer au message une signature pour former un message signé, caractérisé par le fait que :

l'émetteur comporte :

- des moyens pour élaborer et associer, au message signé, des informations de contrôle en émission, découlant du message signé selon une loi déterminée, et
- des moyens d'émission, à destination du récepteur, de données représentant le message signé et les

informations de contrôle en émission, et le récepteur comporte :

- des moyens de réception des dites données transmises,
- des moyens de détermination, selon ladite loi, d'informations de contrôle en réception découlant du message reçu, et
- des moyens de comparaison des informations de contrôle en réception avec les informations de contrôle en émission, pour valider le message reçu en cas de coïncidence.

Les moyens d'émission sont en outre de préférence commandés par des moyens d'élaboration d'informations d'identification de l'émetteur ayant servi à personnaliser ladite loi, et le récepteur comporte des moyens de personnalisation de même de la loi, d'après les informations d'identification de l'émetteur reçues par les moyens de réception, commandant les moyens de détermination des informations de contrôle en réception.

L'émetteur est de préférence agencé pour que la dite loi fasse que les informations de contrôle en émission soient représentatives d'au moins un type d'informations choisi parmi le groupe formé par des informations de consistance et des informations de signification du message.

Les divers moyens ci-dessus de l'émetteur et du récepteur peuvent être des éléments matériels ou circuits câblés pour effectuer leur fonction, et/ou des éléments logiciels tournant sur de tels éléments matériels dédiés ou, commodément, sur une unité centrale arithmétique utilisée en partage de temps entre ces fonctions et éventuellement d'autres fonctions externes à l'invention. Chaque fonction selon l'invention peut donc se présenter sous la forme d'un logiciel stocké dans un support informatique de mémoire fixe ou amovible, par exemple un disque dur, une disquette, un CD ROM, une carte à puce ou autre, situé à proximité de l'émetteur ou du récepteur ou bien distant et accessible à ceux-ci. La carte à puce peut en outre comporter tout ou partie des moyens de traitement mettant en oeuvre les logiciels.

L'invention concerne enfin un support de données contenant un ensemble de logiciels de commande d'un système informatique pour la mise en oeuvre du procédé de l'invention, l'ensemble de logiciels comportant au moins l'un parmi les deux sous-ensembles suivantes :

un premier sous-ensemble, destiné à l'émetteur, contenant un logiciel pour commander au système d'associer au message signé des informations de contrôle en émission, découlant du message signé selon une loi déterminée, et un logiciel pour commander d'élaborer et d'émettre, à destination du récepteur, des données représentant le message signé et les informations de contrôle en émission, et

un second sous-ensemble, destiné au récepteur, contenant un logiciel de réception des dites données transmises, un logiciel de détermination, selon ladite loi, des informations de contrôle en réception découlant du message reçu, et un logiciel de comparaison des informations de contrôle en réception avec les informations de contrôle en émission, pour valider le message reçu en cas de coïncidence.

Le premier sous-ensemble peut en outre contenir un logiciel d'élaboration et de transmission en outre d'informations d'identification de l'émetteur ayant servi à personnaliser ladite loi, et le second sous-ensemble contient un logiciel de personnalisation de même de la loi, d'après les informations d'identification de l'émetteur reçues, pour déterminer les informations de contrôle en réception.

La dite loi peut être établie pour que les informations de contrôle en émission soient représentatives d'au moins un type d'informations choisi parmi le groupe formé par des informations de consistance et des informations de signification du message.

Le support de données peut consister en une carte à puce.

L'invention sera mieux comprise à l'aide de la description suivante d'un mode préféré de mise en oeuvre du procédé de l'invention, en référence au dessin annexé, dans lequel :

- la figure 1 représente globalement les moyens nécessaires à la mise en oeuvre du procédé de l'invention, constitués d'un émetteur et d'un récepteur reliés par une ligne de transmission de messages,
- la figure 2 représente schématiquement une vue de détail des opérations qui se déroulent au niveau de l'émetteur et du récepteur,
- la figure 3 représente schématiquement une vue de détail des informations d'élaboration du chiffrement de protection des contenus des messages qui se déroulent au niveau de l'émetteur, et
- la figure 4 représente des étapes de détermination d'une information d'identification de l'émetteur IDENT_SPY pour utilisation dans les opérations de la figure 2 à partir de l'information d'identification cryptée.

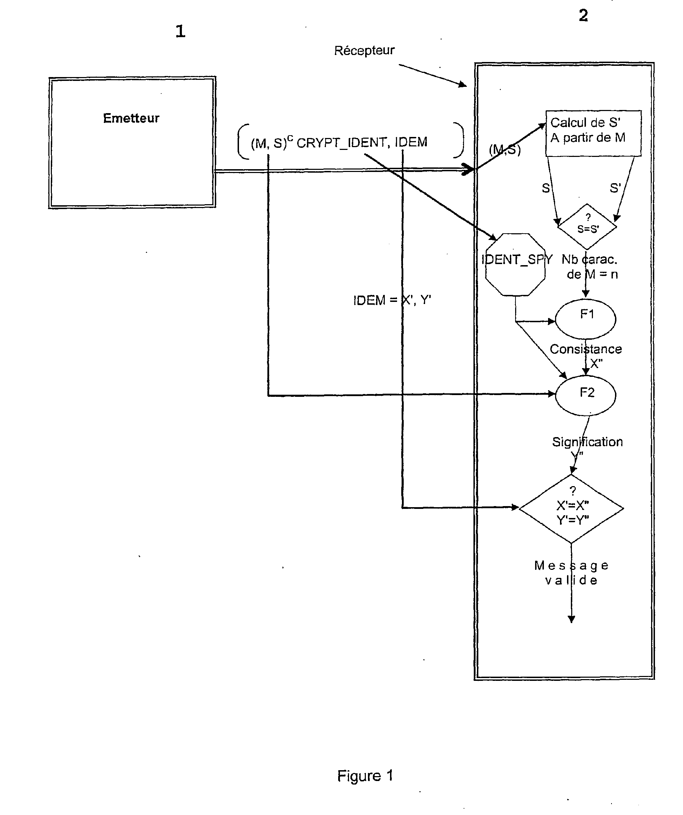

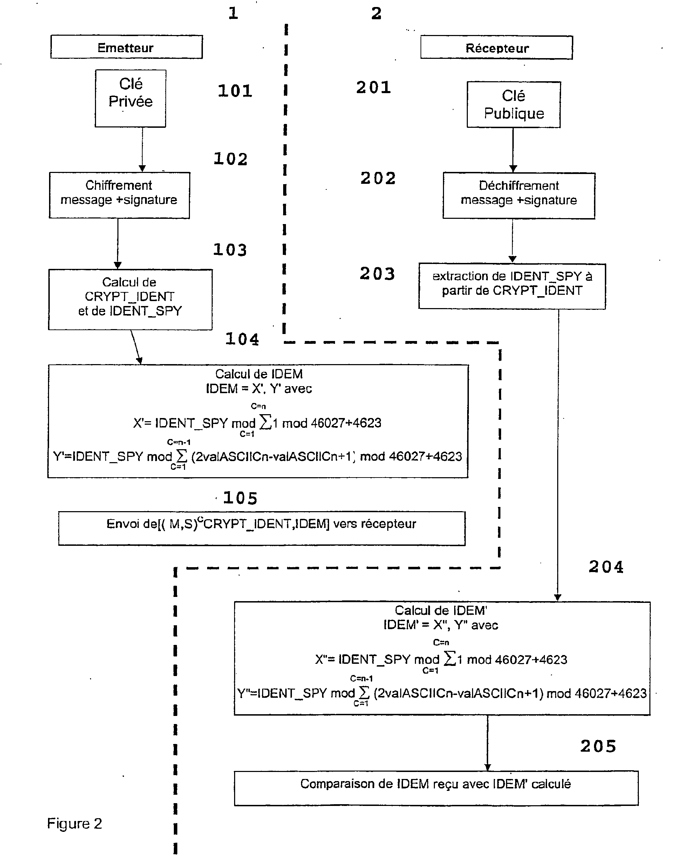

En référence aux figures 1 et 2, dans une transmission classique de messages d'informations entre deux terminaux informatiques respectivement un émetteur 1 et un récepteur 2 à travers une ligne de communication. L'émetteur 1 lit, à une étape 101 (fig. 2), une clé secrète pour effectuer, sur le contenu du message M, un calcul d'une signature S à une étape 103 qui est ensuite adjointe au contenu du message pour former un message signé, subissant éventuellement une opération de chiffrement C, étape 103, le message signé chiffré $(M,S)^c$ étant ensuite transmis, à une étape 105, au récepteur 2 par la ligne de communication.

Ensuite le récepteur 2, par utilisation d'un algorithme de déchiffrement, symétrique ou asymétrique, étape 202 après lecture d'une clé publique, étape 201, déchiffre si nécessaire le message signé chiffré, pour en extraire le contenu utile du message et la signature reçue. Le récepteur 2 effectue, sur ce contenu, le même calcul que celui effectué par l'émetteur 1, pour déterminer localement une nouvelle signature S' qu'il compare à la signature S reçue. En cas d'égalité lors de la comparaison, le récepteur 2 considère que le message reçu, et donc le contenu utile, correspond à celui émis.

Toutefois ce processus n'est pas infaillible car, par exemple, le récepteur 2 ne détectera pas qu'un fraudeur a inversé les positions de caractères du contenu du message, car la signature ne le détecte pas toujours, ou encore qu'il a reçu, du fraudeur, un message à contenu déterminé par ce dernier mais valablement signé, éventuellement en substitution d'un message signé authentique.

Selon le procédé illustré plus en détails à la figure 2, l'émetteur 1 calcule en plus, à une étape 104, des informations de signature en émission IDEM, découlant du message selon une loi déterminée. Dans cet exemple, l'émetteur 1 calcule en outre, dans une base de calcul d'identité Y déterminée de façon aléatoire, des informations d'identification de l'émetteur, IDENT_SPY, qui sont éventuellement cryptées en CRYPT_IDENT, auxquelles l'émetteur 1 ajoute des informations d'identification de la base Y. L'ensemble de ces informations, IDEM et IDENT_SPY ou CRYPT_IDENT, est ensuite transmis au récepteur 2.

L'émetteur 1 associe ainsi au message signé des informations IDEM de contrôle en émission, découlant du message signé selon la loi déterminée, et l'émetteur 1 élabore et émet, à destination du récepteur 2, des données représentant le message signé et les informations de contrôle en émission IDEM, ainsi que, dans cet exemple, les informations d'identification de l'émetteur, IDENT__SPY, qui personnalisent la loi.

A réception de ces informations, le récepteur 2 va tout d'abord, si nécessaire, déchiffrer $(C^{-1})$ la partie chiffrée du message puis calculer une signature S' d'après le contenu du message M déchiffré et la comparer avec la signature reçue S, pour vérifier qu'elles sont identiques.

Dans le cas où cette comparaison préalable est positive, le récepteur 2 détermine, selon ladite loi, des informations IDEM' de contrôle en réception découlant du message reçu, et il compare les informations de contrôle en réception IDEM' avec les informations de contrôle en émission IDEM, pour valider le message reçu en cas de coïncidence.

La dite loi met ici en oeuvre une fonction mathématique.

Le récepteur 2 poursuit ici son processus de validation du message en déterminant, à partir des informations d'identification de l'émetteur IDENT_SPY cryptées CRYPT_IDENT, étape 203, celles, indiquées plus haut, qui permettent de retrouver la base Y de calcul de la valeur d'informations d'identification de l'émetteur 1, c'est-à-dire le terminal ou son utilisateur, IDENT_SPY, constituées d'une suite de par exemple 11 à 12 chiffres ou caractères ayant chacun une valeur numérique particulière.

A une étape 204, les informations d'identification de l'émetteur 1, IDENT_SPY ou CRYPT_IDENT, sont ici combinées par le récepteur 2 à un nombre, préalablement relevé, de caractères alphanumériques constituant le message, pour en déduire des informations X'' de consistance du message en réception. Les informations d'identification de l'émetteur 1 IDENT_SPY sont aussi ici combinées à des valeurs ASCII représentatives de chacun des caractères du message pour en déduire des informations de signification (Y'') du message en réception. Le récepteur 2 compare alors, étape 205, les informations de consistance et de signification X'', Y'' calculées en réception, aux informations homologues X', Y' reçues de consistance et de signification du message en émission, comprises dans les informations de contrôle en émission découlant du message IDEM.

Les références 101 à 105 et 201 à 205 désignent, outre les étapes indiquées, deux ensembles de blocs de calcul de traitement, de circuits matériels et/ou de logiciels de l'émetteur 1 et respectivement du récepteur 2, prévus pour exécuter les fonctions indiquées.

L'information de consistance du message en réception X'' est ici calculée par le récepteur 2 en appliquant l'algorithme suivant :

le récepteur 2 utilise ici un nombre représentant l'information d'identification de l'émetteur IDENT_SPY, dont chaque caractère représente une valeur particulière, et effectue une première division, en divisant ce nombre par une valeur d'un nombre représentant le nombre de caractères du message.

Un premier reste obtenu dans la première division est, dans une deuxième division, lui-même divisé par un nombre premier constitué, par exemple, par le nombre premier 46027.

Un deuxième reste obtenu dans la deuxième division est ajouté à ici la valeur 4623 pour s'assurer que le résultat est toujours compris entre des bornes de valeur permettant de coder ce résultat, dans l'une des bases de la pluralité de bases de conversion ou condensation, sous un nombre de caractères alphanumériques restreint, par exemple 3 caractères.

La pluralité de bases de conversion peut par exemple être constituée par des bases comprises entre la base 37 et la base 127. La base 82, valeur moyenne des bases contenues dans la plage d'étendue des caractères du code à barres 128, sert de référence d'évaluation de la robustesse moyenne de ce procédé contre la casse par force brutale.

L'annexe 1 représente la matrice de conversion bijective des caractères en base 37 dans la base décimale et vice-versa.

L'annexe 2 représente la matrice de la base de conversion 67 permettant la conversion des 67 caractères alphanumériques de la colonne b67 en chiffres de la base décimale représentés à la colonne b10 et vice-versa.

On notera que, si la base décimale constitue une base classique servant ici de référence, toute autre base de référence peut toutefois être utilisée.

Afin d'obtenir l'information de signification du message en réception Y'', le récepteur 2 utilise également ici l'information d'identification IDENT_SPY comme dividende pour diviser cette valeur par la somme d'un certain nombre d'éléments, à valeur numérique, correspondant chacun en propre à l'un, particulier, des caractères du message. Chaque élément a ici pour valeur le double de la valeur ASCII d'un caractère de rang k diminuée de la valeur ASCII du caractère suivant de rang k+1, selon un ordre de progression prédéterminé, dans un sens ou dans l'autre. Le reste ainsi obtenu est lui-même divisé par ici le nombre premier 46027, et le reste obtenu est ajouté à ici la valeur 4623 pour déterminer une valeur représentée dans l'une des bases choisies, par exemple en base 37 ou en base 67, sous forme de 3 caractères.

Les valeurs de consistance X'' et de signification Y'' calculées en réception sont comparées aux valeurs homologues X' et Y', transmises avec le message M ou séparément, ayant été calculées par l'émetteur 1. La valeur de signification Y', comme on le comprendra par l'exemple ci-après, est déterminée de telle façon que la valeur du nombre d'identification de l'émetteur IDENT_SPY, fixée pour limiter la capacité de registres mémoires, est étendue dans cet exemple entre 32259945714 et 32259948772 lorsqu'il est divisé, par la première division, par le diviseur qui est constitué à partir de la valeur ASCII des caractères, ou à partir du nombre de caractères, comme on l'a expliqué précédemment et qui peut donc prendre une valeur comprise, dans cet exemple, entre 003210985 et 333210952.

Puis lorsque, par la deuxième division, on divise le premier reste, obtenu par la première division, par le nombre premier 46027, on obtient un second reste auquel il est ajouté la valeur constante 4623. On obtient, dans un premier cas, concernant la vérification de consistance du message, la valeur 4623 en base 10 qui, transformée en base 37, vaut « 3dz » et, en base 67, « 120 ». Dans un deuxième cas, concernant la signification du message, on obtient 50649 en base 10, ce qui, représenté en base 37, prend la valeur « Aax », et, en base 67, la valeur « bi£ ». Les trois informations (la première information, d'identification de l'émetteur CRYPT_IDENT, et les deuxième et troisième informations de consistance X' et de signification Y' du message) ainsi ajoutées ou associées au message, constituent, pour la première, une information qui se distingue indépendamment des deux suivantes.

La première information, d'identification de l'émetteur, CRYPT_IDENT, est obtenue d'un bloc de longueur prédéterminée, encore appelé ici troncature, de plusieurs caractères ici de poids forts, parmi lesquels se trouve placé, à un rang tiré aléatoirement, un caractère représentant la base mathématique Y d'expression du résultat du calcul.

La première information, d'identification de l'émetteur, CRYPT_IDENT, constitue un premier bloc formant un condensé identitaire, d'une personne physique ou morale
ou d'un document ou d'un objet, obtenu par application d'un algorithme de calcul As tiré aléatoirement parmi une pluralité de taille s et dont les différents termes et constantes de la fonction mathématique sont constitués de nombres convertis, exprimés en base déterminée, ici décimale, et provenant des différentes rubriques alphabétiques et numériques identifiant la personne morale, la personne physique, l'objet, le document ou l'information à authentifier dans la transmission.

La seconde information X' découle du contenu du document dématérialisé et fournit la preuve de sa consistance en vérifiant que le message contient bien les N caractères prévus et cette seconde information est exprimée dans cet exemple par la fonction (F1) :

$$\text{IDENT\_SPY} \quad \text{MOD} \quad \sum_{C_i=1}^{C_i=n} C_i \bmod 46027 + 4623 = X'$$

La troisième information Y' découle aussi du contenu du message et fournit la preuve de son sens ou de sa signification en reposant sur la valeur ASCII de chacun des caractères composant le message. Cette troisième information est obtenue dans cet exemple par la formule (F2) :

$$\text{IDENT\_SPY} \quad \text{MOD} \quad \sum_{C_i=1}^{C_i=n-1} (2 \text{ val ASCII } C_i - \text{ val ASCII } C_{i+1}) \bmod 46027 + 4623 = Y'$$

Ces deux derniers résultats concaténés X', Y' forment un second bloc, ou troncature, de caractères de poids faibles, qui, concaténée à la première troncature d'identification de l'émetteur CRYPT_IDENT, est ici concaténée au message signé M,S. La première troncature, d'identification de l'émetteur, CRYPT_IDENT, confirme l'identité du signataire du message dématérialisé et déchiffré, la seconde troncature X', Y' permet sa validation ou sa répudiation en cas d'altération pour causes diverses du contenu.

Le système et procédé décrits peuvent être utilisés également pour des paiements électroniques effectués par titre au porteur pourvu d'une zone grattable ou autre découvrant la seconde troncature X', Y' qui doit alors contenir un code aléatoire résultant du calcul effectué pour valider des références de chacun des titres.

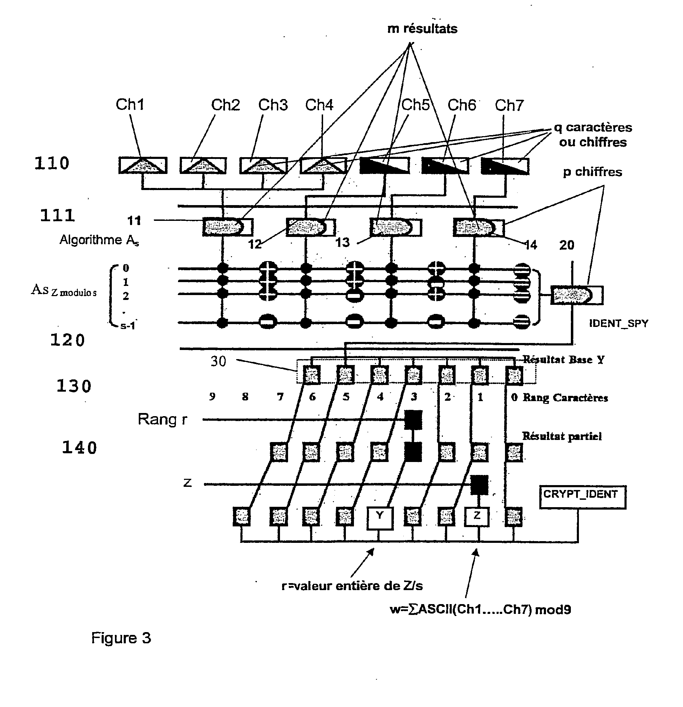

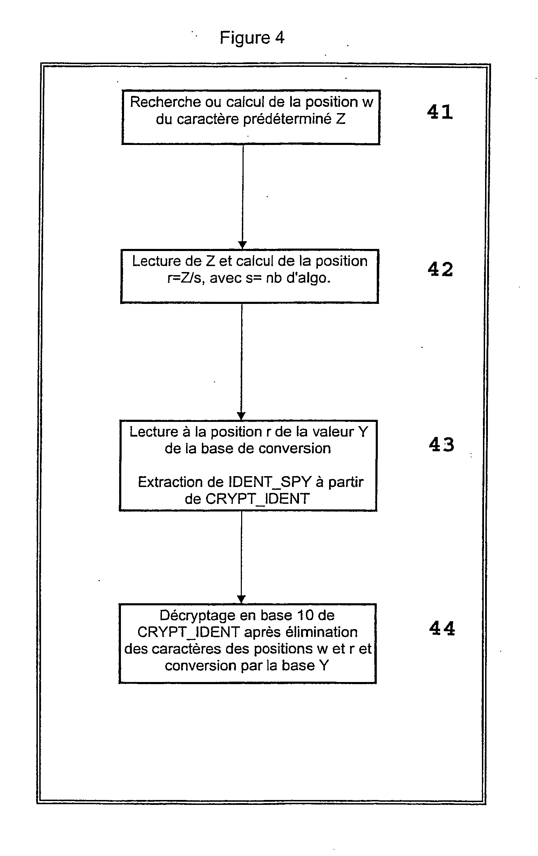

Le principe d'élaboration d'un résultat de traitement, selon un exemple particulier, d'informations à protéger va maintenant être explicité en liaison avec les figures 3 et 4 pour permettre une meilleure compréhension de la présente invention.

Pour la clarté de l'exposé, sur l'organigramme d'étapes du procédé illustré par la figure 3, des blocs de calcul ou traitement effectuant les étapes respectives sont chacun dessinés sous une forme de plusieurs cadres élémentaires illustrant leur fonction, leur référence, avec une centaine 1, étant portée à côté.

Un premier résultat est élaboré, par un bloc de calcul 110 de l'émetteur 1, à partir de chaînes de caractères alphanumériques, ici des chaînes de caractères alphabétiques Ch1 à Ch4 et des chaînes de valeurs numériques Ch5 à Ch7, représentant des rubriques à protéger pour identifier des falsifications sur des informations ou des documents ou des identités de personnes physiques ou morales, ou d'objets.

Les chaînes Ch1 à Ch7 sont ensuite condensées, par un bloc de calcul 111, en une pluralité d'ici quatre résultats intermédiaires référencés 11, 12, 13, 14 comportant chacun un nombre p de chiffres déterminés, représentant des caractères et des valeurs numériques des chaînes Ch1 à Ch7, inférieurs ou égaux à la valeur de la base utilisée moins une unité, c'est-à-dire ici n'excédant pas le chiffre 9 pour la base décimale.

Les résultats intermédiaires référencés 11 à 14 (premier résultat) sont ensuite transformés, par des moyens de calcul de transformation 120, par un algorithme As tiré aléatoirement parmi la pluralité s, en un deuxième résultat référencé 20 de p chiffres exprimé ici en base décimale élaboré par une matrice de conversion dans une base décimale mémorisée dans le système de calcul de l'émetteur 1. Le deuxième résultat référencé 20 constitue la première information, d'identification de l'émetteur (IDENT_SPY), utilisée ici ultérieurement pour déterminer la deuxième information (X') et la troisième information (Y').

La première information, d'identification de l'émetteur, IDENT_SPY est ensuite transformée, par des moyens de calcul de cryptage 130, en une autre information ou valeur cryptée référencée 30 ayant un nombre prédéterminé de caractères alphanumériques exprimés dans la base mathématique d'identité Y choisie aléatoirement par l'émetteur 1, par exemple un système de calcul, pour obtenir un identifiant crypté. La base Y est choisie aléatoirement par un algorithme de tirage aléatoire du système de calcul et parmi une pluralité, de taille V, de bases de conversion disponibles mémorisées en association avec le système de calcul. Les V bases de calcul peuvent être comprises, comme dans l'exemple exposé, entre les bases 37 et 67 qui figurent en annexes. Le nombre V de bases peut aussi couvrir la plage entre la base 37 et une base 127, ce qui correspond à un maximum de V = 91 bases, dont la valeur moyenne est 82.

Dans la suite de caractères constituant la valeur cryptée finale référencée 30, des moyens de calcul 140 insèrent, à un rang variable r déterminé de façon aléatoire, le caractère identificateur Y dont la valeur identifie la base de conversion. Le rang r du caractère identificateur Y est fourni par un pointeur Z, encore appelé clé aléatoire, inséré à un rang W prédéterminé ou variable par calcul dans la dite suite cryptée 30.

Lorsque le rang ou position W du pointeur Z est déterminé par calcul, celui-ci est par exemple calculé, par les moyens de calcul 140, en prenant la somme en ASCII d'une

ou plusieurs troncatures ou blocs des rubriques alphanumériques d'une troncature de la chaîne de caractères Ch1 à Ch7 et en déterminant cette somme, modulo 9, dans l'exemple de la base décimale. Le reste ainsi obtenu, par la division par 9, détermine le rang W du pointeur Z, à une étape 41 de la figure 4, et permet donc de le lire, à une étape 42. Dans cet exemple, le pointeur Z est en fait représenté dans la suite cryptée 30 par une adresse en bibliothèque, qui est ainsi lue. Une division du pointeur Z par la valeur s représentative du nombre d'algorithmes As, détermine ensuite, en fin d'étape 42, le rang r du caractère Y d'identification de la base de conversion. La base de conversion Y étant ainsi reconnue et lue à une étape 43, le récepteur 2 peut recalculer en sens inverse, en remontant, la valeur numérique IDENT_SPY en base décimale, à partir du cryptogramme final CRYPT_IDENT après avoir occulté les caractères de service Y et Z, de rangs r et W, à une étape 44. Les références 41 à 44 peuvent aussi représenter les moyens matériels et logiciels assurant les traitements exposés ci-dessus dans le récepteur 2.

Les calculs ou tirages aléatoires effectués par l'un ou l'autre des terminaux émetteur 1 et récepteur 2 peuvent toutefois être pris en charge en tout ou partie par une carte à puce, ou tout autre dispositif de calcul proche ou distant, communiquant avec le terminal considéré. Le terminal, fixe ou portable, et la carte à puce ou autre sont pourvus des algorithmes et des informations mémorisées nécessaires pour amorcer la mise en oeuvre de l'une des étapes du processus. Par exemple, la carte à puce peut contenir les tables de conversion et fournir les valeurs nécessaires au terminal.

La carte à puce peut aussi contenir les moyens de tirage aléatoire d'un algorithme parmi la pluralité s et/ou de la table de conversion de la pluralité V. La carte à puce peut également contenir les algorithmes de décryptage pour obtenir l'information d'identification d'émetteur IDENT_SPY ou les algorithmes de cryptage pour déterminer la consistance à partir des chaînes Ch1 à Ch7. La carte à puce peut également contenir les algorithmes de calcul de la consistance X' ou X'' et de la signification Y' ou Y''. Enfin, la carte à puce peut contenir toute combinaison des fonctions ci-dessus.

On comprendra que l'invention n'est nullement limitée au cas particulier des valeurs fournies en exemple, que ce soit la plage des bases de conversion avec la nature précise de leurs caractères, numériques, alphanumériques ou autres, ou encore la valeur des constantes de calcul utilisées et les longueurs respectives ou nombres respectifs de caractères de chacune des troncatures, c'est-à-dire des divers blocs de caractères.

ANNEXA 1

*Matrice de la base 37*

| b37 | B10 |
|---|---|
| 0 | 0 |
| 1 | 1 |
| 2 | 2 |
| 3 | 3 |
| 4 | 4 |
| 5 | 5 |
| 6 | 6 |
| 7 | 7 |
| 8 | 8 |
| 9 | 9 |
| a | 10 |
| b | 11 |
| c | 12 |
| d | 13 |
| e | 14 |
| f | 15 |
| g | 16 |
| h | 17 |
| i | 18 |
| j | 19 |
| k | 20 |

(suite)

*Matrice de la base 37*

| b37 | B10 |
|-----|-----|
| 1 | 21 |
| m | 22 |
| n | 23 |
| o | 24 |
| p | 25 |
| q | 26 |
| r | 27 |
| s | 28 |
| t | 29 |
| u | 30 |
| v | 31 |
| w | 32 |
| x | 33 |
| y | 34 |
| z | 35 |
| A | 36 |

ANNEXE 2

*Matrice de la base 67*

| b10 | b67 | b10 | b67 |
|-----|-----|-----|-----|
| 0 | 0 | 34 | y |
| 1 | 1 | 35 | z |
| 2 | 2 | 36 | A |
| 3 | 3 | 37 | B |
| 4 | 4 | 38 | C |
| 5 | 5 | 39 | D |
| 6 | 6 | 40 | E |
| 7 | 7 | 41 | F |
| 8 | 8 | 42 | G |
| 9 | 9 | 43 | H |
| 10 | a | 44 | I |
| 11 | b | 45 | J |
| 12 | c | 46 | K |
| 13 | d | 47 | L |
| 14 | e | 48 | M |
| 15 | f | 49 | N |
| 16 | g | 50 | O |
| 17 | h | 51 | P |
| 18 | i | 52 | Q |
| 19 | j | 53 | R |
| 20 | k | 54 | S |
| 21 | 1 | 55 | T |
| 22 | m | 56 | U |
| 23 | n | 57 | V |
| 24 | o | 58 | W |
| 25 | p | 59 | X |

(suite)

*Matrice* de *la base 67*

| b10 | b67 | b10 | b67 |
|-----|-----|-----|-----|
| 26 | q | 60 | Y |
| 27 | r | 61 | Z |
| 28 | s | 62 | @ |
| 29 | t | 63 | $ |
| 30 | u | 64 | £ |
| 31 | v | 65 | & |
| 32 | w | 66 | % |
| 33 | x | | |

## Revendications

1. Procédé de sécurisation de la transmission d'un message d'un émetteur (1) à un récepteur (2), dans lequel l'émetteur élabore et intègre au message une signature pour former un message signé, **caractérisé par le fait qu'**il comporte les étapes suivantes :

   - l'émetteur associe au message signé des informations (IDEM) de contrôle en émission, découlant du message signé selon une loi déterminée,
   - l'émetteur élabore et émet (105), à destination du récepteur, des données représentant le message signé et les informations de contrôle en émission (IDEM), et
   - l'émetteur élabore et transmet en outre des informations d'identification de l'émetteur (CRYPT IDENT ou IDENT SPY) ayant servi à personnaliser ladite loi, et le récepteur :
   - reçoit les dites données transmises,
   - personnalise la loi, d'après les informations d'identification de l'émetteur(CRYPT IDENT) ou IDENT SPY) reçues,
   - détermine (204) selon ladite loi personnalisée des informations (IDEM') de contrôle en réception découlant du message reçu, et
   - compare (205) les informations de contrôle en réception (IDEM') avec les informations de contrôle en émission (IDEM), pour valider le message reçu en cas de coïncidence.

2. Procédé selon la revendication 1, dans lequel la dite loi met en oeuvre une fonction mathématique.

3. Procédé selon l'une des revendications 1 ou 2, dans lequel l'émetteur établit la dite loi pour que les informations de contrôle en émission (IDEM) soient représentatives d'au moins un type d'informations choisi parmi le groupe formé par des informations de consistance(X') et des informations de signification du message (Y').

4. Procédé selon la revendication 3, dans lequel les informations de consistance du message (X) sont déterminées par un premier quotient provenant d'une division des informations d'identification de l'émetteur (IDENT SPY) par un nombre de caractères contenus dans le message.

5. Procédé selon la revendication 4, dans lequel un premier reste obtenu par la dite division est lui-même divisé par un nombre premier, pour obtenir un deuxième quotient et un deuxième reste, le deuxième reste étant ajouté à une constante pour obtenir un nombre de caractères prédéterminé, de consistance du message, après conversion dans une base choisie parmi une pluralité de bases de conversion.

6. Procédé selon la revendication 5, dans lequel le reste du deuxième quotient est divisé par un nombre premier pour obtenir un troisième quotient associé à un troisième reste dont la valeur est ajoutée à une valeur constante, pour obtenir les informations de consistance du message (X').

7. Procédé selon la revendication 6, dans lequel le nombre premier est 46027 et la constante est 4623.

8. Procédé selon l'une des revendications 3 à 7, dans lequel les informations de consistance(X') du message sont représentées par des caractères dont le nombre est inférieur à un seuil représentant un pourcentage déterminé par rapport à une taille des données transmises.

9. Procédé selon la revendication 3, dans lequel les informations de signification du message (Y') sont déterminées par sommation d'un nombre déterminé de caractères alphanumériques du message, chaque caractère alphanumérique ayant pour valeur le double d'une valeur ASCII représentative du caractère considéré, diminuée d'une valeur ASCII représentative d'un caractère adjacent, la somme résultante servant de diviseur d'un dividende, constitué par les informations d'identification de l'émetteur(IDENT-SPY), pour obtenir les informations de signification du message.

10. Procédé selon l'une des revendications 3 à 9, dans lequel les informations de signification(Y') du message sont représentées par des caractères dont le nombre est inférieur à un seuil représentant un pourcentage déterminé par rapport à une taille des données transmises.

11. Procédé selon l'une des revendications précédentes, dans lequel les informations d'identification de l'émetteur (IDENT SPY) sont obtenues : par une étape de transcodage de chaînes, de tailles déterminées, de caractères alphanumériques représentant des rubriques à protéger, fournissant un premier ensemble de résultats intermédiaires ayant chacun un nombre déterminé de chiffres, et une étape de transformation du premier ensemble de résultats intermédiaires, par un algorithme de transformation (As) choisi aléatoirement parmi une pluralité (s) utilisant chacun une base de caractères alphanumériques particulière à l'algorithme considéré, pour obtenir un résultat final(IDENT SPY) après conversion par une matrice de conversion des caractères de la base alphanumérique de l'algorithme choisi en des caractères à valeurs numériques d'une base prédéterminée.

12. Procédé selon la revendication 11, dans lequel les informations d'identification de l'émetteur(IDENT SPY) sont transmises sous forme cryptée, en transformant les informations d'identification de l'émetteur, en base déterminée, en un résultat crypté, à nombre déterminé de chiffres exprimés dans une base mathématique (Y) choisie aléatoirement parmi une pluralité (V) de bases de conversion pour obtenir un identifiant crypté de l'émetteur(CRYPT-IDENT) dans lequel des informations (Y), d'identification de la base mathématique choisie, sont insérées à un rang variable (r) spécifié par un pointeur (Z) inséré à un rang (W) pour lequel le récepteur dispose d'informations pour le déterminer.

13. Procédé selon la revendication 12, dans lequel le rang (r) des informations (Y) d'identifcation de la base mathématique choisie est défini par un quotient entier obtenu par division d'une valeur particulière, associée par une table au pointeur (Z), par un nombre (s) spécifiant la taille de la pluralité d'algorithmes (As).

14. Procédé selon l'une des revendications 12 et 13, dans lequel le rang (W) du pointeur (Z) est inséré à un rang calculé en prenant la somme, modulo 9, de codes ASCII d'un dit résultat intermédiaire représent des termes spécifiant une fonction mathématique déterminant les informations d'identification de l'émetteur (IDENT SPY).

15. Procédé selon l'une revendications 13 et 14, dans lequel le récepteur : - calcule la somme des codes ASCII d'au moins un bloc de données d'une dite rubrique alphanumérique, reçu dans les informations d'identification de l'émetteur, - exprime la dite somme en modulo 9, pour déterminer le rang (W) du pointeur (Z),- lit le dit pointeur (Z) reçu, et

- calcule le rang (r) des informations (Y) d'identification de la base mathématique choisie, en divisant la valeur particulière, associée au pointeur(Z), par la valeur (s) représent la taille de la pluralité d'algorithmes, exprimées en base prédéterminée, et - exploite les informations cryptées reçues(CRYPT IDENT) après en avoir éliminé les informations (Y) d'identification de la base mathématique choisie et le pointeur (Z).

16. Procédé selon l'une des revendications 1 à 15, dans lequel les dites données sont transmises au récepteur à travers un système de stockage de données.

17. Procédé selon la revendication 16, dans lequel le récepteur (2) est aussi l'émetteur (1).

18. Système de sécurisation pour la mise en oeuvre du procédé de l'une des revendications 1 à 17, comprenant un émetteur (1) associé à un récepteur (2), l'émetteur étant agencé pour élaborer et intégrer au message une signature pour former un message signé, **caractérisé par le fait que** : l'émetteur (1) comporte :- des moyens (103,104) pour élaborer et associer, au message signé, des informations (IDEM) de contrôle en émission, découlant du message signé selon une loi déterminée, et- des moyens (105) d'émission, à destination du récepteur (2), de données représentant le message signé et les informations de contrôle en émission (IDEM), et le récepteur (2) comporte :-

des moyens de réception des dites données transmises,- des moyens (203,204) de détermination, selon ladite loi, d'informations de contrôle en réception découlant du message reçu, et - des moyens (205) de comparaison des informations de contrôle en réception avec les informations de contrôle en émission (IDEM), pour valider le message reçu en cas de coïncidence.

19. Système de sécurisation selon la revendication 18, dans lequel les moyens d'émission (105) sont en outre commandés par des moyens (103) d'élaboration d'informations d'identification de l'émetteur(CRYPT IDENT ou IDENT SPY) ayant servi à personnaliser ladite loi, et le récepteur comporte des moyens de personnalisation de même de la loi, d'après les informations d'identification de l'émetteur(CRYPT IDENT ou IDENT SPY) reçues par les moyens de réception, commandant les moyens (204) de détermination des informations de contrôle en réception.

20. Système de sécurisation selon l'une des revendications 18 et 19, dans lequel l'émetteur est agencé (104) pour que la dite loi fasse que les informations de contrôle en émission (IDEM) soient représentatives d'au moins un type d'informations choisi parmi le groupe formé par des informations de consistance et des informations de signification du message.

21. Support de données contenant un ensemble de logiciels de commande d'un système informatique pour la mise en oeuvre du procédé de l'une des revendications 1 à 17, l'ensemble de logiciels comportant au moins l'un parmi les deux sous-ensembles suivants : un premier sous-ensemble, destiné à l'émetteur, contenant un logiciel pour commander au système d'associer au message signé des informations (IDEM) de contrôle en émission, découlant du message signé selon une loi déterminée, et un logiciel pour commander d'élaborer et d'émettre (105), à destination du récepteur, des données représentant le message signé et les informations de contrôle en émission (IDEM), et un second sous-ensemble, destiné au récepteur, contenant un logiciel de réception des dites données transmises, un logiciel de détermination (204), selon ladite loi, des informations (IDEM') de contrôle en réception découlant du message reçu, et un logiciel de comparaison (205) des informations de contrôle en réception (IDEM') avec les informations de contrôle en émission (IDEM), pour valider le message reçu en cas de coïncidence.

22. Support de données selon la revendication 21, dans lequel le premier sous-ensemble contient un logiciel d'élaboration et de transmission en outre des informations d'identification de l'émetteur(CRYPT IDENT ou IDENT SPY) ayant servi à personnaliser ladite loi, et le second sous- ensemble contient un logiciel de personnalisation de même de la loi, d'après les informations d'identification de l'émetteur(CRYPT IDENT ou IDENT SPY) reçues, pour déterminer les informations de contrôle en réception.

23. Support de données selon l'une des revendications 21 et 22, dans lequel la dite loi est établie pour que les informations de contrôle en émission (IDEM) soient représentatives d'au moins un type d'informations choisi parmi le groupe formé par des informations de consistance(X') et des informations de signification du message(Y').

24. Support de données selon l'une des revendications 21 à 23, constitué par une carte à puce.

## Claims

1. Method for ensuring the secure transmission of a message from a transmitter (1) to a receiver (2), in which the transmitter generates and integrates into the message a signature so as to produce a signed message, **characterized by** the fact that said method comprises of the following stages :

   - the transmitter associates with the signed message transmission checking information (IDEM) deriving from the signed message according to a specified law, and
   - the transmitter generates and transmits (105) to the receiver data that represent the signed message and the transmission checking information (IDEM),
   - the transmitter additionally generates and transmits transmitter identification information (CRYPT_IDENT or IDENT_SPY) that was used to personalize said law,
   and the receiver :
   - receives said transmitted data,
   - personalizes the law according to the transmitter identification information (CRYPT_IDENT or IDENT_SPY) that is received,
   - determines (204), according to said law, reception checking information (IDEM') deriving from the message received, and compares (205) the reception checking information (IDEM') against the transmission checking information (IDEM) in order to validate the message received in the event that they coincide.

2.  Method according to claim 1, wherein said law implements a mathematical function.

3.  Method according to claim 1 or 2, wherein the transmitter sets up said law such that the transmission checking information (IDEM) is representative of at least one kind of information that is selected from within the group composed of message consistency information (X') and message meaning information (Y').

4.  Method according to claim 3, wherein the message consistency information (X) is determined by a first quotient that is provided by dividing the transmitter identification information (IDENT_SPY) by a number of characters contained in the message.

5.  Method according to claim 4, wherein a first remainder that is obtained by the above-mentioned division step is itself divided by a prime number in order to obtain a second quotient and a second remainder, whereby the second remainder is added to a constant to obtain a predetermined number of characters, of message consistency, after conversion into a base that is selected from among a set of conversion bases.

6.  Method according to claim 5, wherein the remainder from the second quotient is divided by a first number in order to obtain a third quotient that is associated with a third remainder whose value is added to a constant value to obtain the message consistency information (X').

7.  Method according to claim 6, wherein the prime number is 46027 and the constant is 4623.

8.  Method according to anyone of claims 3 to 7, wherein the message consistency information (X') is represented by characters, the number of which is below a threshold that represents a specified percentage relative to a size of the transmitted data.

9.  Method according to claim 3, wherein the message meaning information (Y') is determined by adding up a specified number of alphanumeric characters of the message, whereby each alphanumeric character has a value that is twice an ASCII value that is representative of the character in question, minus an ASCII value that is representative of an adjacent character, whereby the resulting sum is taken as a divisor of a dividend, which is the transmitter identification information (IDENT_SPY), so as to provide the message meaning information.

10. Method according to anyone of claims 3 to 9, wherein the message meaning information (Y') is represented by characters, the number of which is below a threshold that represents a specified percentage relative to a size of the transmitted data.

11. Method according to anyone of the previous claims, wherein the transmitter identification information (IDENT_SPY) is obtained :

    by a stage for transcoding of strings, of specified sizes, of alphanumeric characters that represent data fields to be protected, thus providing a first set of intermediate results, each of which has a specified number of digits, and
    a stage for transforming the first set of intermediate results by means of a transformation algorithm (As) that is randomly selected from among a set of algorithms (s), each of which uses an alphanumeric-character base that is particular to the algorithm in question in order to obtain a final result (IDENT_SPY) after a conversion matrix is used to convert the characters of the alphanumeric base of the selected algorithm into characters having numerical values of a predetermined base.

12. Method according to claim 11, wherein the transmitter identification information (IDENT_SPY) is transmitted in encoded form by transforming the transmitter identification information, in a specified base, into an encoded result that has a specified number of digits expressed in a mathematical base (Y) that is randomly selected from a set (V) of conversion bases in order to obtain an encoded identifier of the transmitter (CRYPT_IDENT) wherein information (Y), identifying the selected mathematical base, is inserted at a variable rank (r) that is a specified by a pointer (Z) that is inserted at a rank (W) for which the receiver has information for determining said rank.

13. Method according to claim 12, wherein the rank (r) of the information (Y) for identifying the selected mathematical base is defined by an integer quotient that is obtained by dividing a particular value, which is associated with the pointer (Z) by a table, by a number (s) that specifies the size of the set of algorithms (As).

14. Method according to one of the claims 12 and 13, wherein the rank (W) of the pointer (Z) is inserted at a rank that is calculated by taking the sum, modulo 9, of ASCII codes of said intermediate result that represents terms that specify a mathematical function that determines the transmitter identification information (IDENT_SPY).

15. Method according to one of the claims 13 and 14, wherein the receiver:

    calculates the sum of the ASCII codes of at least one block of data of one said alphanumeric data field, whereby said block is received in the transmitter identification information,
    expresses said sum in modulo 9, to determine the rank (W) of the pointer (Z),
    reads said pointer (Z) that is received, and
    calculates the rank (r) of the identification information (Y) of the selected mathematical base by dividing the particular value associated with the pointer (Z) by the value (s) that represents the size of the set of algorithms as expressed in a predetermined base, and
    exploits the encoded information received (CRYPT_IDENT) after eliminating therefrom the identification information (Y) of the selected mathematical base and the pointer (Z).

16. Method according to anyone of the claims 1 to 15, wherein said data are transmitted to the receiver via a data storage system.

17. Method according to claim 16, wherein the receiver (2) is also the transmitter (1).

18. System for securing the implementation of the method of anyone of the claims 1 to 17, comprising a transmitter (1) that is associated with a receiver (2), whereby the transmitter is designed to generate and integrate with the message a signature so as to produce a signed message, wherein :

    the transmitter (1) contains :

        means (103, 104) for generating and associating with the signed message transmission checking information (IDEM) deriving from the signed message according to a specified law, and
        means (105) for sending to the receiver (2) data that represent the signed message and the transmission checking information (IDEM),
        and the receiver (2) contains :

            means for receiving said transmitted data,
            means (203, 204) for determining, according to said law, reception checking information deriving from the message received, and
            means (205) for comparing the reception checking information against the transmission checking information (IDEM) in order to validate the received message in the event that they coincide.

19. Security system according to claim 18, wherein the transmission means (105) are further controlled by means (103) for generating transmitter identification information (CRYPT_IDENT or IDENT_SPY) that was used to personalize said law, and the receiver likewise contains means for personalizing the law, according to the transmitter identification information (CRYPT_IDENT or IDENT_SPY) that was received by the reception means, which control the means (204) for determining the reception checking information.

20. Security system according to one of the claims 18 and 19, wherein the transmitter is designed (104) such that said law ensures that the transmission checking information (IDEM) is representative of at least one kind of information that is selected from among the group that consists of the message consistency information and the message meaning information.

21. Data medium that contains a set of softwares for controlling a computer system for implementing the method of one of the claims 1 to 17, whereby the set of softwares contains at least one of the following two subsets :

    a first subset for the transmitter that contains software for controlling the system for associating with the signed message transmission checking information (IDEM) deriving from the signed message according to a specified law, and software for controlling the generation and transmission (105) to the receiver of the data that represent the signed message and the transmission checking information (IDEM), and

a second subset for the receiver that contains software for receiving the said transmitted data, software (204) for determining, according to said law, the reception checking information (IDEM') deriving from the received message, and software (205) for comparing the reception checking information (IDEM') against the transmission checking information (IDEM) in order to validate the received message in the event that they coincide.

22. Software medium according to claim 21, wherein the first subset additionally contains software for generating and transmitting the transmitter identification information (CRYPT_IDENT or IDENT_SPY) that was used to personalize said law, and the second subset likewise contains software for personalization of the law based on the transmitter identification information (CRYPT_IDENT or IDENT_SPY) that is received in order to determine the reception checking information.

23. Data medium according to one of the claims 21 and 22, wherein said law is set up such that the transmission checking information (IDEM) is representative of at least one kind of information that is selected from the group that consists of the message consistency information (X') and the message meaning information (Y').

24. Data medium according to one of the claims 21 to 23, consisting of a chip card.

**Patentansprüche**

1. Verfahren zur Übertragungssicherung einer Nachricht von einem Sender (1) zu einem Empfänger (2), bei dem der Sender eine Signatur ausarbeitet und in die Nachricht integriert, um eine signierte Nachricht zu bilden, **gekennzeichnet durch** die Tatsache, dass es die folgenden Schritte enthält:

- der Sender ordnet der signierten Nachricht Informationen (IDEM) zur Sendungskontrolle zu, die entsprechend einem bestimmten Gesetz aus der signierten Nachricht hervorgehen,
- der Sender erarbeitet und sendet (105) in Richtung des Empfängers Daten, die die signierte Nachricht und die Informationen zur Sendungskontrolie (IDEM) darstellen, und
- der Sender erarbeitet und überträgt darüber hinaus Informationen zur Identifizierung des Senders (CRYPT IDENT oder IDENT SPY), die dazu gedient haben, das besagte Gesetz zu personalisieren,
und der Empfänger:
- empfängt die besagten übertragenen Daten,
- personalisiert das Gesetz entsprechend den erhaltenen Informationen zur Identifizierung des Senders (CRYPT IDENT oder IDENT SPY),
- bestimmt (204) entsprechend dem besagten personalisierten Gesetz Informationen (IDEM') zur Sendungskontrolle, die aus der empfangenen Nachricht hervorgehen, und
- vergleicht (205) die Informationen zur Sendungskontrolle (IDEM') mit den Informationen zur Sendungskontrolle (IDEM), um die empfangene Nachricht im Falle einer Übereinstimmung zu bestätigen.

2. Verfahren nach Anspruch 1, bei dem das besagte Gesetz eine mathematische Funktion anwendet.

3. Verfahren nach einem der Ansprüche 1 oder 2, bei dem der Sender das besagte Gesetz erstellt, damit die Informationen zur Sendungskontrolle (IDEM) zumindest für einen Informationstyp repräsentativ sind, der aus der Gruppe ausgewählt wird, die durch Informationen zur Beschaffenheit (X') und Informationen zur Bedeutung der Nachricht (Y') gebildet wird.

4. Verfahren nach Anspruch 3, bei dem die Informationen zur Beschaffenheit der Nachricht (X) durch einen ersten Quotienten gebildet werden, der aus einer Division von Informationen zur Identifizierung des Senders (IDENT SPY) durch eine Anzahl an Zeichen hervorgeht, die in der Nachricht enthalten sind.

5. Verfahren nach Anspruch 4, bei dem ein erster Rest, der aus der besagten Division hervorgeht, selbst durch eine Primzahl dividiert wird, um einen zweiten Quotienten und einen zweiten Rest zu erhalten, wobei der zweite Rest einer Konstanten zugerechnet wird, um eine vorbestimmte Zeichenzahl der Beschaffenheit der Nachricht nach Umwandlung in eine Basis zu erhalten, die aus einer Vielzahl an Umwandlungsbasen ausgewählt wird.

6. Verfahren nach Anspruch 5, bei dem der Rest des zweiten Quotienten durch eine Primzahl dividiert wird, um einen dritten Quotienten zu erhalten, der einem dritten Rest zugeordnet wird, dessen Wert einer Konstanten zugerechnet wird, um die Informationen zur Beschaffenheit der Nachricht (X') zu erhalten.

7. Verfahren nach Anspruch 6, bei dem die Primzahl 46027, und die Konstante 4623 sind.

8. Verfahren nach einem der Ansprüche 3 bis 7, bei dem die Informationen zur Beschaffenheit (X') der Nachricht durch Zeichen dargestellt werden, deren Anzahl unter einem Grenzwert liegt, der einen Prozentsatz darstellt, der in Bezug auf eine Größe der übertragenen Daten bestimmt wird.

9. Verfahren nach Anspruch 3, bei dem die Informationen zur Bedeutung der Nachricht (Y') durch die Summierung einer Zahl bestimmt wird, die durch alphanumerische Zeichen der Nachricht bestimmt wird, wobei jedes alphanumerische Zeichen einen Wert aufweist, der dem Doppelten eines repräsentativen ASCII Wertes des angenommenen Zeichens entspricht, vermindert um einen repräsentativen ASCII Wert eines angrenzenden Zeichens, wobei die resultierende Summe als Divisor einer Dividende dient, die durch die Informationen zur Identifizierung des Senders (IDENT-SPY) gebildet wird, um die Informationen zur Bedeutung der Nachricht zu erhalten.

10. Verfahren nach einem der Ansprüche 3 bis 9, bei dem die Informationen zur Bedeutung (Y') der Nachricht durch Zeichen dargestellt werden, deren Anzahl unter einem Grenzwert liegt, der einen Prozentsatz darstellt, der in Bezug auf eine Größe der übertragenen Daten bestimmt wird.

11. Verfahren nach einem der vorherigen Ansprüche, bei dem die Informationen zur Identifizierung des Senders (IDENT-SPY) durch folgende Schritte erhalten werden: durch einen Schritt der Transcodierung von Ketten vorbestimmter Größe, von alphanumerischen Zeichen, die zu schützende Rubriken darstellen, und die eine erste Einheit an Zwischenergebnissen liefern, von denen jede eine bestimmte Anzahl an Ziffern enthält, und einen Schritt der Umformung der ersten Einheit an Zwischenergebnissen durch einen Umformungsalgorithmus (As), der zufällig aus einer Vielzahl (s) ausgewählt wird, und der jeweils eine Basis an alphanumerischen Zeichen verwendet, die dem jeweils angenommenen Algorithmus eigen ist, um ein Endergebnis (IDENT SPY) nach Umwandlung der Zeichen der alphanumerischen Basis des gewählten Algorithmus durch eine Umwandlungsmatrix in Zeichen mit digitalen Werten einer vorbestimmten Basis zu erhalten.

12. Verfahren nach Anspruch 11, bei dem die Informationen zur Identifizierung des Senders (IDENT-SPY) in einer verschlüsselten Form übertragen werden, indem man die Information zur Identifizierung des Senders in einer bestimmten Basis in ein verschlüsseltes Ergebnis mit einer bestimmten Zahl an Ziffern umwandelt, die in einer mathematischen Basis (Y) ausgedrückt werden, die zufällig aus einer Vielzahl (V) an Umwandlungsbasen ausgewählt wird, um eine verschlüsselte Personenidentifizierung des Senders (CRYPT-IDENT) zu erhalten, bei der Informationen (Y) zur Identifizierung der gewählten mathematischen Basis in einen variablen Rang (r) eingesetzt wird, die von einem Pointer (Z) spezifiziert wird, der in eine Reihe (W) eingesetzt wird, für deren Bestimmung der Empfänger Informationen innehat.

13. Verfahren nach Anspruch 12, bei dem der Rang (r) der Informationen (Y) zur Identifizierung der gewählten mathematischen Basis durch einen ganzen Quotienten definiert wird, den man durch die Division eines speziellen Wertes, der dem Pointer (Z) durch eine Tabelle zugeordnet wird, durch eine Zahl (s) erhält, die die Größe der Vielzahl an Algorithmen (As) festlegt.

14. Verfahren nach einem der Ansprüche 12 und 13, bei dem der Rang (W) des Pointers (Z) in einen Rang eingeführt wird, der **dadurch** errechnet wird, indem man die Summe Modulo 9 von ASCII Codes eines besagten Zwischenergebnisses annimmt, die Termini darstellt, die eine mathematische Funktion spezifiziert, die die Informationen zur Identifizierung des Senders (IDENT-SPY) bestimmen.

15. Verfahren nach einem der Ansprüche 13 und 14, bei dem der Empfänger:

   - die Summe des ASCII Codes zumindest eines Datenblocks einer besagten alphanumerischen Rubrik berechnet, der in den Informationen zur Identifizierung des Senders erhalten wird, - die besagte Summe Modulo 9 ausdrückt, um den Rang (W) des Pointers (Z) zu bestimmen, - den besagten empfangenen Pointer (Z) liest, und - den Rang (r) der Informationen (Y) zur Identifizierung der gewählten mathematischen Basis berechnet, indem man den Einzelwert, der dem Pointer (Z) zugeordnet wird, durch den Wert (s) dividiert, der die Größe der Vielzahl an Algorithmen darstellt, die in der vorbestimmten Basis ausgedrückt werden, und - die empfangenen verschlüsselten Informationen (CRYPT IDENT) auswertet, nachdem man daraus die Informationen (Y) zur Identifizierung der gewählten mathematischen Basis und den Pointer (Z) eliminiert hat.

**16.** Verfahren nach einem der Ansprüche 1 bis 15, bei dem die besagten Daten dem Empfänger über ein System zur Datenablage übermittelt werden.

**17.** Verfahren nach Anspruch 16, bei dem der Empfänger (2) auch der Sender ist.

**18.** Sicherungssystem zur Umsetzung des Verfahrens eines der Ansprüche 1 bis 17, mit einem Sender (1), der einem Empfänger (2) zugeordnet ist, wobei der Sender so ausgeführt ist, dass er eine Signatur ausarbeitet und in die Nachricht integriert, um eine signierte Nachricht zu bilden, **gekennzeichnet durch** die Tatsache, dass: der Sender (1) folgendes enthält: - Mittel (103, 104) zur Ausarbeitung und Zuordnung von Informationen (IDEM) zur Sendungskontrolle der signierten Nachricht, die entsprechend einem bestimmten Gesetz aus der signierten Nachricht hervorgehen, und - Mittel (105) zur Sendung von Daten in Richtung des Empfängers (2), die die signierte Nachricht und die Informationen zur Sendungskontrolle (IDEM) darstellen, und der Empfänger (2) enthält folgendes: - Mittel zum Empfang der besagten übermittelten Daten, - Mittel (203, 204) zur Bestimmung von Informationen zur Sendungskontrolle entsprechend dem besagten Gesetz, die aus der empfangenen Nachricht hervorgehen, und - Mittel (205) zum Vergleichen von Informationen zur Sendungskontrolle mit den Informationen zur Sendungskontrolle (IDEM), um die empfangene Nachricht im Falle einer Übereinstimmung zu bestätigen.

**19.** Sicherungssystem nach Anspruch 18, bei dem die Mittel zur Sendung (105) darüber hinaus durch Mittel (103) zur Ausarbeitung von Informationen zur Identifizierung des Senders (CRYPT IDENT oder IDENT SPY) gesteuert werden, die dazu gedient haben, das besagte Gesetz zu personalisieren, und der Empfänger enthält Mittel zur Personalisierung des Gesetzes, entsprechend den Informationen zur Identifizierung des Senders (CRYPT IDENT oder IDENT SPY), die von den Empfangsmitteln empfangen wurden, und die die Mittel (204) zur Bestimmung der Informationen zur Empfangskontrolle steuern.

**20.** Sicherungssystem nach einem der Ansprüche 18 und 19, bei dem der Sender so ausgeführt (104) ist, dass das besagte Gesetz dafür sorgt, dass die Informationen zur Sendungskontrolle (IDEM) zumindest für einen Infonnationstyp repräsentativ sind, der aus einer Gruppe ausgewählt wird, die aus Informationen zur Beschaffenheit und Informationen zur Bedeutung der Nachricht gebildet wird.

**21.** Datensupport mit einer Einheit an Programmen zum Steuern eines Informatiksystems zur Anwendung eines Verfahrens eines der Ansprüche 1 bis 17, wobei die Programmeinheiten zumindest eine der beiden folgenden Untereinheiten enthalten: eine erste Untereinheit, die für den Sender bestimmt ist, mit einem Programm, das dem System befiehlt, der signierten Nachricht Informationen (IDEM) zur Sendungskontrolle zuzuordnen, die entsprechend einem Gesetz aus der signierten Nachricht hervorgehen, und mit einem Programm für den Befehl, in Richtung des Empfängers, Daten auszuarbeiten und zu senden (105), die die signierte Nachricht und die Informationen zur Sendungskontrolle (IDEM) darstellt, und eine zweite Untereinheit, die für den Empfänger bestimmt ist, mit einem Programm zum Empfangen der besagten übertragenen Daten, einem Programm zur Bestimmung der Informationen (IDEM') zur Empfangskontrolle entsprechend dem besagten Gesetz, die aus der empfangenen Nachricht hervorgehen, und einem Programm zum Vergleich (205) der Informationen zur Empfangskontrolle (IDEM') mit den Informationen zur Sendungskontrolle (IDEM) zum Bestätigen der empfangenen Nachricht im Falle einer Übereinstimmung.

**22.** Datensupport nach Anspruch 21, bei dem die erste Untereinheit ein Programm zur Ausarbeitung und Übertragung von Informationen zur Identifizierung des Senders (CRYPT IDENT oder IDENT SPY) enthält, die zur Personalisierung des besagten Gesetzes gedient haben, und bei dem die zweite Untereinheit ein Programm zur Personalisierung des Gesetzes entsprechend den erhaltenen Informationen zur Identifizierung des Senders (CRYPT IDENT oder IDENT SPY) enthält, um die Informationen zur Empfangskontrolle zu bestimmen.

**23.** Datensupport nach einem der Ansprüche 21 und 22, bei dem das besagte Gesetz erstellt wird, damit die Informationen zur Sendungskontrolle (IDEM) repräsentativ für zumindest einen Informationstyp sind, der aus einer Gruppe ausgewählt wird, die von Informationen zur Beschaffenheit (X') und Informationen zur Bedeutung der Nachricht (Y') gebildet wird.

**24.** Datensupport nach einem der Ansprüche 21 bis 23, der durch eine Chipkarte gebildet wird.

**1**

**2**

Récepteur

Emetteur

$(M, S)^C$ CRYPT_IDENT, IDEM

$(M,S)$

Calcul de S'
A partir de M

S          S'

?
S=S'

IDENT_SPY    Nb carac.
de M = n

IDEM = X', Y'

F1

Consistance
X"

F2

Signification
Y"

?
X'=X"
Y'=Y"

Message
valide

Figure 1

Figure 2

**m résultats**

Ch1  Ch2  Ch3  Ch4  Ch5  Ch6  Ch7

q caractères ou chiffres

110

p chiffres

111   11   Algorithme $A_s$

12   13   14   20

$A_s$ Z modulo s   $\begin{matrix} 0 \\ 1 \\ 2 \\ \cdot \\ s\text{-}1 \end{matrix}$

IDENT_SPY

120

30   Résultat Base Y

130   9   8   7   6   5   4   3   2   1   0   Rang Caractères

Rang r   Résultat partiel

140

Z   CRYPT_IDENT

Y   Z

r=valeur entière de Z/s

$w = \sum ASCII(Ch1.....Ch7) \bmod 9$

Figure 3

## Figure 4

Recherche ou calcul de la position w
du caractère prédéterminé Z

**41**

Lecture de Z et calcul de la position
r=Z/s, avec s= nb d'algo.

**42**

Lecture à la position r de la valeur Y
de la base de conversion

Extraction de IDENT_SPY à partir
de CRYPT_IDENT

**43**

Décryptage en base 10 de
CRYPT_IDENT après élimination
des caractères des positions w et r et
conversion par la base Y

**44**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6163842 A

- US 2002023221 A